# FASCICULE DE BREVET EUROPEEN

(11) **EP 0 409 707 B1**
(45) Date de publication et mention de la délivrance du brevet: **27.04.1994**
(21) Numéro de dépôt: 90402032.8
(22) Date de dépôt: 13.07.1990
(51) Int. Cl.: F16F 13/00, B60K 5/12

(54) **Perfectionnements aux dispositifs antivibratoires hydrauliques**
Hydraulische Antischwingungsvorrichtungen
Hydraulic antivibration devices

(30) Priorité: 19.07.1989 FR 8909721
(43) Date de publication de la demande: 23.01.1991
(73) Titulaire: HUTCHINSON, F-75008 Paris (FR)
(72) Inventeur: Dubos, Daniel, F-92600 Asnières (FR); Salaud, Jean-Luc, F-78700 Conflans Sainte Honorine (FR); Bretaudeau, Jean-Pierre, F-28200 Chateaudun (FR)
(74) Mandataire: Behaghel, Pierre

(56) Documents cités:
- EP-A- 0 163 817
- EP-A- 0 271 894
- EP-A- 0 298 862
- DE-A- 3 710 629
- DE-A- 3 840 286
- FR-A- 2 555 272
- US-A- 4 842 258
- PATENT ABSTRACTS OF JAPAN vol. 11, no. 205 (M-603)(2652) 03 juillet 1987,& JP-A-62 24048 (BRIDGESTONE) 02 février 1987,
- PATENT ABSTRACTS OF JAPAN vol. 13, no. 194 (M-823)(3542) 10 mai 1989,& JP-A-01 21238 (TOKAI RUBBER) 24 janvier 1989,

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- une armature rigide annulaire et une embase rigide coaxiale à cette armature, solidarisables respectivement avec les deux éléments rigides à réunir,
- un ressort annulaire en élastomère d'axe X résistant à la compression axiale, interposé entre l'armature et le plot,
- une membrane flexible et étanche portée par l'armature et délimitant une enceinte avec celle-ci et avec un second organe flexible étanche,
- une cloison rigide intermédiaire portée par l'armature et divisant l'intérieur de l'enceinte en deux chambres, l'une de travail du côté du ressort et l'autre de compensation,
- un passage étranglé faisant communiquer en permanence les deux chambres entre elles,
- et une masse de liquide contenue dans les deux chambres et dans le passage étranglé.

Comme on le sait, avec un tel dispositif, l'application sur l'une des armatures, selon la direction X, d'oscillations de relativement grande amplitude (généralement supérieure à 0,5 mm) et de relativement basse fréquence (généralement de l'ordre de 5 à 20 Hz) ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées.

L'invention vise plus particulièrement encore, parmi les dispositifs antivibratoires du genre ci-dessus, ceux dans lesquels :
- d'une part, l'embase se présente sous la forme d'un sabot débordant transversalement à partir d'un pied central,
- et d'autre part, l'armature annulaire comprend une rondelle rigide traversée par le pied et dont l'ouverture est trop petite pour pouvoir livrer passage axialement au sabot.

Ces dispositifs présentent le grand avantage qu'ils ne peuvent pas être détruits par arrachement axial vu la butée du sabot contre le bord de la rondelle.

Mais certains de ces dispositifs risquent de créer un effet hydraulique indésirable du fait du contact direct entre le liquide et le ressort en élastomère (voir le document FR-A-2 555 272).

De plus, dans un tel dispositif,
- le débit du liquide refoulé dans le passage étranglé lors du fonctionnement du dispositif est directement lié à la forme adoptée pour le ressort en élastomère, puisque c'est une face de ce ressort qui délimite directement en partie la chambre de travail,
- le ressort en élastomère doit être rigoureusement étanche au liquide et il doit être monté d'une manière rigoureusement étanche sur l'armature et l'embase qu'il réunit.

Il en résulte certaines servitudes sur le choix du ressort.

L'invention a pour but, surtout, de rendre les dispositifs amortisseurs du genre considéré tels que les inconvénients signalés ci-dessus soient écartés, c'est-à-dire à la fois de supprimer la création d'effets hydrauliques indésirables et de conférer une plus grande liberté pour le choix des formes et des matériaux constitutifs du ressort.

Ce but est atteind par un dispositif antivibratoire selon les caractéristiques de la revendication principale.

Les dispositifs antivibratoires selon l'invention sont essentiellement caractérisés en ce que le second organe flexible étanche est un soufflet indépendant du ressort et dont la rigidité axiale est négligeable par rapport à la raideur du ressort et en ce que la périphérie du sabot est reliée de façon étanche à l'armature annulaire par au moins une partie de ce soufflet.

Dans des modes de réalisation préférés, on a recours en outre à l'une et/ou à l'autre des dispositions' suivantes :
- le ressort est tronconique et orienté de façon à converger vers le centre du dispositif,
- le soufflet est constitué en élastomère,
- le soufflet est constitué par une toile imperméabilisée,
- le ressort est constitué par un corps en élastomère ajouré de part en part.
- l'enceinte composée par les deux chambres est annulaire et traversable par une vis qui sert elle-même à solidariser le pied et le sabot, le soufflet reliant le bord de ce sabot à respectivement les bords interne et externe de la cloison intermédiaire, alors annulaire.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant au dessin ci-annexé d'une manière bien entendu non limitative.

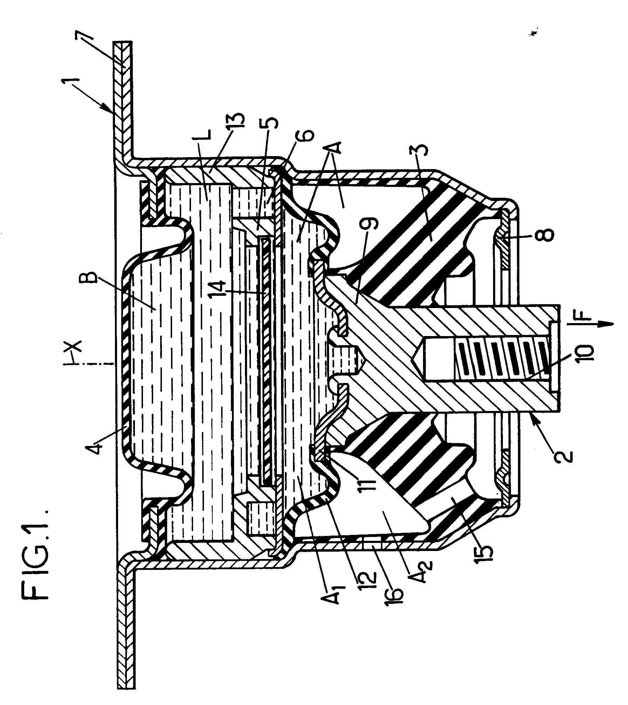

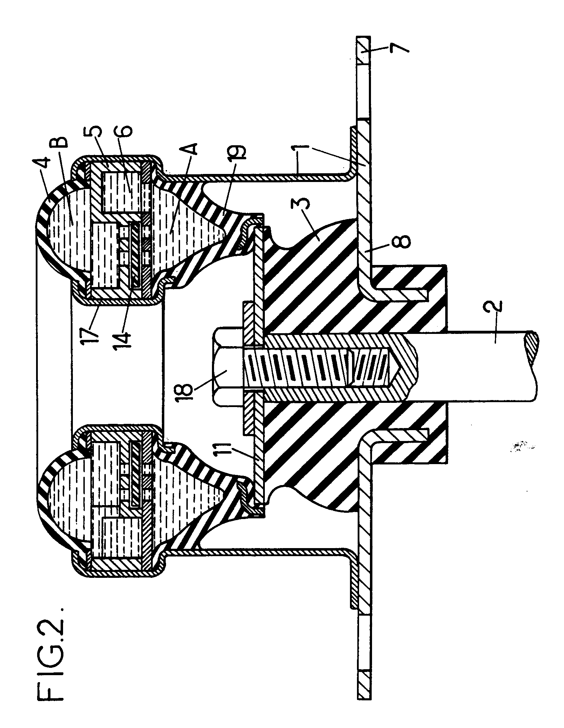

Les figures 1 et 2, de ces dessins, montrent en coupe axiale respectivement deux dispositifs antivibratoires hydrauliques établis selon l'invention.

Le dispositif antivibratoire représenté sur la figure 1 comprend:
- une armature annulaire rigide 1 d'axe vertical X et un plot coaxial 2 destinés à être fixés respectivement sur les deux éléments rigides que l'on désire monter l'un sur l'autre avec amortissement de leurs oscillations mutuelles, éléments faisant partie par exemple, respectivement, d'un châssis de véhicule et d'un moteur à combustion interne ou train de suspension compris par ce véhicule,
- un ressort tronconique en élastomère 3 interposé verticalement entre l'armature 1 et le plot 2,
- une membrane flexible et étanche 4 montée de façon étanche sur l'armature 1 de manière à former une enceinte avec elle et avec le ressort 3,
- une cloison intermédiaire rigide 5 portée par l'armature 2 et divisant l'intérieur de l'enceinte ci-dessus en deux chambres, l'une A, "de travail", du côté du ressort 3 et l'autre B, "de compensation",
- et un passage étranglé 6 évidé dans la cloison 5 et reliant en permanence les deux chambres A et B.

L'armature annulaire 1 se présente ici sous la forme d'un manchon cylindrique dont l'extrémité supérieure est prolongée radialement par une collerette extérieure horizontale 7.

La base de ce manchon présente une forme tronconique rétrécie et est prolongée intérieurement par une rondelle rigide 8 sertie sur elle.

Le plot 2 présente la forme générale d'un embout cylindrique d'axe X dont la tête 9, épanouie selon un tronc de cône, se trouve au centre du dispositif.

La base de cet embout est évidée axialement par un alésage fileté 10 destiné à recevoir un goujon ou boulon de fixation.

Le ressort tronconique 3 relie la face tronconique interne de la portion inférieure du manchon 1 à la face tronconique externe de la tête du plot 2.

En d'autres termes, ce ressort 3 présente une forme rentrante à l'intérieur du support, convergeant vers le centre de celui-ci.

En outre, la tête 9 du plot 2 est prolongée radialement par un sabot ou semelle débordant 11 de contour circulaire et, selon l'invention, la périphérie de ce sabot 11 est reliée de façon étanche à la cloison intermédiaire 5 par un soufflet étanche et flexible 12 présentant une faible résistance à la déformation axiale.

La portion de la cloison intermédiaire 5 à laquelle est relié le soufflet 12 est avantageusement la périphérie de cette cloison.

Mais elle pourrait également être disposée dans une région intermédiaire de cette cloison, présentant alors par exemple un diamètre égal au diamètre extérieur du sabot, le soufflet 12 pouvant alors présenter un profil ayant la forme extérieure d'un tore.

La liaison entre le soufflet 12 et la cloison intermédiaire 5 pourrait aussi être localisée dans une plage centrale de cette cloison, le soufflet pouvant alors se présenter sous la forme d'un sac à bord refermé vers le sabot et à fond perforé par une extrémité du passage étranglé 6.

Le soufflet 12 est constitué notamment en élastomère, armé ou non, ou encore en une toile imperméabilisée.

La cloison intérieure 5 est constituée par une collerette horizontale prolongeant intérieurement une bague cylindrique 13 emmanchée jointivement dans le manchon 1.

D'une façon connue en soi, le passage étranglé 6 est évidé selon un arc de cercle d'axe X dans ladite collerette 5 et débouche respectivement à ses deux extrémités sur les deux faces de ladite collerette.

Le volume formé par la chambre B, le passage étranglé 6 et la portion A₁, de la chambre A, qui est délimitée par la cloison 5, le sabot 11 et le soufflet 12 est rempli d'un liquide amortisseur L tel que de l'eau additionnée d'antigel.

Un tel dispositif est destiné à rendre possibles les oscillations imposées à l'armature 1 par rapport au plot 2 selon l'axe X, tout en amortissant ces oscillations si leur fréquence est suffisamment basse, généralement comprise entre 5 et 20 Hz et si leur amplitude est suffisante, savoir supérieure à 0,5 mm.

Lors de la phase de compression de chaque cycle, c'est-à-dire de l'exercice d'un effort descendant sur le plot 2 par rapport à l'armature 1 selon la flèche F, sous l'effet notamment du poids d'une charge suspendue audit plot 2, le ressort 3 se comprime et une portion du volume de liquide L contenu dans la chambre B est refoulée vers la sous-chambre A₁ à travers le passage 6, ce qui se traduit par de légères déformations par flexion de la membrane 4 et du soufflet 12.

Lors de la phase de détente consécutive, le ressort 3 se dilate et la portion de volume liquide ci-dessus mentionnée repasse de la sous-chambre A₁ à la chambre B à travers le passage 6.

Ce va-et-vient d'un petit volume de liquide dans le passage 6 est effectué au rythme des oscillations à amortir et, pour une fréquence donnée fₒ de ces oscillations, correspondant à un dimensionnement donné du passage 6 --et plus précisément à une valeur donnée du rapport entre la longueur de ce passage et sa largeur moyenne ou "diamètre fictif"-- il se produit dans le petit volume en question un phénomène de résonance engendrant l'amortissement desdites oscillations.

On voit également sur la figure un clapet mobile 14 monté dans la cloison intermédiaire 5, laquelle forme ici un cadre rigide encageant ledit clapet de manière à limiter l'amplitude de ses débattements à une valeur faible, généralement de l'ordre de 0,5 mm.

Comme on le sait, la présence entre les deux chambres A₁ et B de ce clapet 11 --qui pourrait être remplacé par une membrane flexible étanche raccordée de manière étanche au reste de la cloison 5-- permet de filtrer le transfert des vibrations de petite amplitude (inférieure à 0,5 mm) et de fréquence relativement élevée (généralement supérieure à 20 Hz) de l'armature 1 au plot 2 et inversement.

Le ressort 3 est totalement indépendant du soufflet 12, ce qui permet de séparer totalement les deux fonctions de support ou centrage élastique mutuel de l'armature 1 et du plot 2 et de confinement du liquide amortisseur L.

De ce fait, ledit ressort 3 peut être évidé d'alvéoles ou même de lumières le traversant de part en part, comme visible en 15, étant donné que son étanchéité n'est plus requise ici.

Des lumières 16 pourraient également être évidées dans la portion, du manchon cylindrique 1, qui entoure la sous-chambre A₂ délimitée par le ressort 3, la périphérie du sabot 11, le soufflet 12 et ladite portion, de façon à mettre cette sous-chambre A₂ à l'air libre.

En suite de quoi, et quel que soit le mode de réalisation adopté, on obtient finalement un dispositif antivibratoire hydraulique dont la constitution et le fonctionnement résultent suffisamment de ce qui précède.

Ce dispositif présente un certain nombre d'avantages par rapport à ceux antérieurement connus, en particulier :
- la suppression des phénomènes hydrauliques parasites indésirables qui pouvaient être dus précédemment au contact direct du liquide amortisseur avec une face du ressort en élastomère et à l'immersion du sabot dans ledit liquide, ce qui a pour effet en particulier de diminuer la raideur dynamique du support aussi bien axiale que radiale, pour les valeurs relativement élevées de la fréquence des oscillations à amortir,
- et l'indépendance entre les deux fonctions d'élasticité et de capacité étanche pour le liquide.

Cette indépendance rend possibles de nouvelles constructions et en particulier elle permet de constituer le ressort par un élément perméable au liquide tel que par exemple un corps en élastomère ajouré ; elle permet également d'adopter pour constituer le ressort un matériau résistant aux températures élevées.

Dans le dispositif antivibratoire représenté sur le figure 2, les éléments comparables à ceux déjà décrits en référence à la figure 1 ont été affectés des mêmes références numériques que précédemment.

Ce dispositif diffère essentiellement du précédent en ce qu'il présente une configuration générale annulaire permettant d'assurer à l'aide de vis vissables depuis le haut la totalité des fixations, c'est-à-dire par exemple aussi bien celle de l'armature annulaire sur un chassis de véhicule que celle du plot central sur un moteur de véhicule, alors suspendu inférieurement.

A cet effet l'armature annulaire 1 comprend non seulement un manchon cylindrique extérieur prolongé par une collerette ou platine de fixation 7, mais aussi une bague cylindrique intérieure coaxiale 17 délimitant intérieurement la cloison intermédiaire 5, alors annulaire.

Le diamètre intérieur de cette bague 17 est suffisant pour livrer passage à une vis de fixation 18 (voir plus loin) et à un outil de serrage de cette vis.

La membrane 4 est également annulaire ainsi que la chambre de compensation B et il en est de même de l'autre chambre A, laquelle est ici délimitée par la cloison intermédiaire 5, annulaire elle aussi, et par un soufflet annulaire étanche 19 raccordé de façon étanche aux deux bords interne et externe de cette cloison.

Ce soufflet 19 présente une faible résistance a la déformation axiale et tient ici le rôle de la membrane 12 du précédent mode de réalisation.

C'est sur l'extrémité axiale ou base de ce soufflet 19 qui est la plus éloignée de la cloison 5 que prend appui axialement le bord du sabot 11.

Ce sabot est ici constitué par un disque perforé en son centre et solidarisé, notamment par vissage de la vis de fixation centrale 18, avec un pied cylindrique central 2 plein ou creux lui-même solidaire de l'élément rigide à suspendre.

Il est à noter que, dans ce mode de réalisation, la solidarisation entre le pied 2 et le "sabot" 11 qui le prolonge n'est pas établie lorsque le support est démonté, mais elle est établie lors du montage du support et demeure établie pendant toute la vie de fonctionnement de celui-ci.

Le ressort 3 encore interposé axialement entre un col rigide rétréci 8 faisant partie de l'armature 1 et le sabot 11, présente ici une forme de champignon et est perforé d'un alésage cylindrique axial dans lequel est logé le pied 2 avec éventuellement un léger jeu radial.

Le fonctionnement de ce support amortisseur est tout à fait analogue à celui du support précédent les fonctions de support élastique et d'étanchéité sont encore assumées par deux organes liés au sabot 11 et totalement indépendants l'un de l'autre (ressort 3 et soufflet 12).

Comme il va de soi, et comme il résulte d'ailleurs déjà de ce qui précède, l'invention ne se limite nullement à ceux de ses modes d'application et de réalisation qui ont été plus spécialement envisagés elle en embrasse, au contraire, toutes le variantes, notamment celles où la rondelle 8 propre à coagir avec le sabot 11 lors des sollicitations à l'arrachement axial serait prévue axialement à proximité dudit sabot au lieu d'être disposée axialement extérieurement au ressort 3.

## Revendications

1. Dispositif antivibratoire hydraulique destiné à être interposé aux fins d'amortissement et de liaison entre deux éléments rigides, comportant une armature rigide annulaire (1) et une embase rigide (2) coaxiale à cette armature, solidarisables respectivement avec les deux éléments rigides à réunir, un ressort annulaire en élastomère (3) résistant à la compression axiale, interposé entre l'armature et l'embase, une membrane flexible et étanche (4) portée par l'armature et délimitant une enceinte avec celle--ci et avec un second organe flexible étanche, une cloison rigide intermédiaire (5) portée par l'armature et divisant l'intérieur de l'enceinte en deux chambres (A,B), un passage étranglé (6) faisant communiquer en permanence les deux chambres entre elles, et une masse de liquide (L) contenue dans les deux chambres et dans le passage étranglé, dans lequel en outre, d'une part, l'embase (2) se présente sous la forme d'un sabot (11) débordant transversalement à partir d'un pied central, et d'autre part, l'armature annulaire (1) comprend une rondelle rigide (8) traversée par le pied (2) et dont l'ouverture est trop petite pour pouvoir livrer passage axialement au sabot (11), caractérisé en ce que le second organe flexible étanche est un soufflet (12,19), indépendant du ressort (3) et dont la rigidité axiale est négligeable par rapport à la raideur du ressort et en ce que la périphérie du sabot (11) est reliée de façon étanche à l'armature annulaire (1) par au moins une partie de ce soufflet (12,19).

2. Dispositif selon la revendication 1, caractérisé en ce que le ressort (3) est tronconique et orienté de façon à converger vers le centre du dispositif.

3. Dispositif selon l'une quelconque des précédentes revendications, caractérisé en ce que le soufflet (12, 19) est constitué en élastomère.

4. Dispositif selon l'une quelconque des revendications 1 et 2, caractérisé en ce que le soufflet (12,19) est constitué par une toile imperméabilisée.

5. Dispositif selon l'une quelconque des précédentes revendications, caractérisé en ce que le ressort (3) et constitué par un corps en élastomère ajouré de part en part (en 15).

6. Dispositif selon l'un quelconque des précédentes revendications, caractérisé en ce que l'enceinte composée par les deux chambres (A,B) est annulaire et traversable par une vis (18) qui sert elle-même à solidariser le pied (2) et le sabot (11), le soufflet (19) reliant le bord de ce sabot à respectivement les bords interne et externe de la cloison intermédiaire (5), alors annulaire.

## Patentansprüche

1. Hydraulische Antischwingungsvorrichtung, die zur Dämpfung und Verbindung für den Einbau zwischen zwei starren Elementen vorgesehen ist und aus folgenden Teilen besteht: einer starren ringförmigen Armatur (1) und einem koaxial zu dieser angeordneten Fußstück (2), die an dem einen bzw. anderen der zu verbindenden starren Elemente befestigbar sind, einer ringförmigen Federung (3) aus elastomerem Material, die gegenüber der Druckbelastung in axialer Richtung widerstandsfähig und zwischen der Armatur und dem Fußstück angeordnet ist, einer flexiblen und dichten Membran (4), die durch die Armatur gehalten wird und mit dieser und mit einem zweiten dichten, biegsamen Organ einen Raum begrenzt, einer dazwischenliegenden starren Trennwand (5), die von der Armatur gehalten wird und das Innere des Raumes in zwei Kammern (A, B) unterteilt, einem verengten Durchgang (6), der die beiden Kammern dauernd miteinander verbindet und einer flüssigen Masse (L), die in den beiden Kammern und dem verengten Durchgang vorhanden ist, wobei ferner einerseits das Fußstück (2) die Form eines in Querrichtung gegenüber einem mittleren Fuß vorstehenden Flansches (11) hat und andererseits die ringförmige Armatur (1) eine starre Scheibe (8) enthält, durch die der Fuß (2) hindurchgeführt ist und deren Öffnung zu klein ist, um den Flansch in axialer Richtung hindurchtreten zu lassen, dadurch gekennzeichnet, daß das zweite biegsame, dichte Organ ein Balg (12, 19) ist, der unabhängig von der Federung (3) ist und dessen Steifigkeit in axialer Richtung, verglichen mit der Steifigkeit der Federung vernachlässigbar ist, und daß der Umfang des Flansches (11) über wenigstens einen Abschnitt des Balges (12, 19) dicht mit der ringförmigen Armatur (1) verbunden ist.

2. Vorrichtung nach Anspruch 1, dadurch gekennzeichnet, daß die Federung (3) konisch und so ausgerichtet ist, daß sie zum Mittelpunkt der Vorrichtung konvergiert.

3. Vorrichtung nach einem der vorhergehenden Ansprüche, dadurch gekennzeichnet, daß der Balg (12, 19) aus einem elastomeren Material besteht.

4. Vorrichtung nach einem der vorhergehenden Ansprüche, dadurch gekennzeichnet, daß der Balg (12, 19) aus einem wasserdicht gemachten Tuch besteht.

5. Vorrichtung nach einem der vorhergehenden Ansprüche, dadurch gekennzeichnet, daß die Federung (3) aus einem elastomeren Körper besteht, der (bei 15) mit einer durchgehenden Durchbrechung versehen ist.

6. Vorrichtung nach einem der vorhergehenden Ansprüche, dadurch gekennzeichnet, daß der Raum, der aus den beiden Kammern (A, B) gebildet wird, ringförmig und von einer Schraube (18) durchdringbar ist, die ihrerseits dazu dient, den Fuß (2) und den Flansch (11) miteinander zu verbinden, wobei der Balg (19) den Rand des Flansches mit dem inneren bzw. äußeren Rand der Zwischentrennwand (5), die ebenfalls ringförmig ist, verbindet.

## Claims

1. Hydraulic antivibratory device intended to be inserted, for damping and connection purposes, between two rigid elements, comprising a rigid annular frame (1) and a rigid base (2) coaxial with this frame, able to be secured respectively to the two rigid elements to be joined together, an annular elastomer spring (3) resisting axial compression, inserted between the frame and the base, a flexible sealed membrane (4) carried by the frame and defining an enclosure therewith and with a second sealed flexible member, a rigid intermediate dividing wall (5) carried by the frame and dividing the inside of the enclosure into two chambers (A,B), a restricted passage (6) causing the two chambers to communicate permanently together, and a liquid mass (L) contained in the two chambers and the restricted passage, in which further, on the one hand, the base (2) is in the form of a shoe (11) projecting transversely from a central foot and, on the other hand, the annular frame (1) comprises a rigid washer (8) through which the foot (2) passes and whose opening is too small to let the shoe (11) pass axially, characterized in that the second sealed flexible member is a bellows (12,19) independent of the spring (3) and the axial rigidity of which is negligible in relation to the stiffness of the spring and in that the periphery of the shoe (11) is joined sealingly to the annular frame (1) by at least one portion of this bellows (12,19).

2. Device according to claim 1, characterized in that the spring (3) is frustroconical and is oriented so as to converge towards the centre of the device.

3. Device according to any of the preceding claims, characterized in that the bellows (12,19) is made from elastomer.

4. Device according to any one of the claims 1 and 2, characterized in that the bellows (12,19) is formed by a waterproofed cloth.

5. Device according to any one of the preceding claims, characterized in that the spring (3) is formed by an elastomer body with through apertures (at 15).

6. Device according to any one of the preceding claims, characterized in that the enclosure formed by the two chambers (A,B) is annular and has passing therethrough a screw (18) which itself serves for securing the foot (2) and the shoe (11) together, the bellows (19) connecting the edge of this shoe to respectively the internal and external edges of the intermediate dividing wall (5), then annular.
